# EUROPÄISCHE PATENTSCHRIFT

(11) **EP 3 961 146 B1**
(45) Veröffentlichungstag und Bekanntmachung des Hinweises auf die Patenterteilung: **05.08.2026**
(21) Anmeldenummer: 21193870.9
(22) Anmeldetag: 30.08.2021
(51) Int. Cl.: G01B 5/00, G01B 5/255

(54) **VORRICHTUNG ZUM VERMESSEN DER GEOMETRIE EINER RADACHSE EINES KRAFTFAHRZEUGES**
DEVICE FOR MEASURING THE GEOMETRY OF A WHEEL AXLE OF A MOTOR VEHICLE
DISPOSITIF DE MESURE DE LA GÉOMÉTRIE D'UN ESSIEU DE ROUE D'UN VÉHICULE AUTOMOBILE

(30) Priorität: 31.08.2020 DE 102020210985
(43) Veröffentlichungstag der Anmeldung: 02.03.2022
(73) Patentinhaber: AuE Kassel GmbH, 34123 Kassel (DE)
(72) Erfinder: Nourdine, Ahmed, 34119 Kassel (DE)
(74) Vertreter: Dr. Solf & Zapf Patent- und Rechtsanwalts PartG mbB

(56) Entgegenhaltungen:
- WO-A1-92/20997
- DE-A1- 102005 029 575
- DE-T2- 3 887 479

## Beschreibung

Die Erfindung betrifft eine Vorrichtung zumindest zum Vermessen, insbesondere auch zum Einstellen, der Geometrie einer Radachse eines Kraftfahrzeuges. Die Vorrichtung weist mindestens zwei Aufnahmevorrichtungen zur Fixierung von gegenüberliegenden Enden der Radachse auf. Die Vorrichtung verfügt ferner über mindestens ein Erfassungsmittel zum Erfassen mindestens eines Geometrieparameters, beispielsweise Spurwinkel oder Sturzwinkel, der Radachse. Jede der Aufnahmevorrichtungen ist in mindestens zwei Raumrichtungen bewegbar gehalten. Jede Aufnahmevorrichtung weist mindestens einen Fixierbereich zur Fixierung eines Endes der Radachse, insbesondere einer Radnabe oder einer Bremsscheibe, auf.

Gattungsgemäße Vorrichtungen sind im Stand der Technik in einer Vielzahl von Ausgestaltungen bekannt.

DE 38 87 479 T2 offenbart beispielsweise ein Verfahren zur Einstellung des Vorspurwinkels und eine Vorrichtung zur Einstellung des Vorspurwinkels. Ein Fahrzeug steht bei einer Messung mit seinen Rädern auf Plattformen, so dass Messplattformen an die Außenseite der Räder herangefahren werden können. Die Messplattformen sind insbesondere über ein Kugelgelenk gelagert.

DE 10 2005 029 575 A1 offenbart eine Vorrichtung zur Bestimmung der Geometrie einer Radachse, bei der die Radnabe eingespannt wird. Dazu weist die Vorrichtung ein Aufnahmelager mit Spannarmen auf.

WO 92/20997 A1 offenbart eine Winkelprüfvorrichtung und einen Prüfstand zur Prüfung von Parametern von Laufrädern eines Fahrzeugs. Eine Befestigungseinheit wird beispielsweise als Messplatte an einem Rad befestigt. Der Fahrzeugrahmen wird bei der Messung über ein Hebewerk 44 angehoben.

Derartige Vorrichtungen dienen zumindest dem Vermessen der Geometrie einer Radachse eines Radkraftfahrzeuges, insbesondere auch zum Einstellen der Geometrie einer Radachse. Zum Vermessen der Geometrie einer Radachse in der Vorrichtung wird die Radachse hauptsächlich an den sogenannten Fahrschemellagern und an den Radnaben fixiert. Dabei werden die gleichen Bedingungen wie unter einem Fahrzeug hergestellt. Um die Belastung im Einbauzustand zu simulieren, wird die Radachse in der Vorrichtung mit einer Kraft, die dem Fahrzeuggewicht entspricht, belastet.

Die Bewegung der Radachse darf während eines Mess- und/oder Einstellvorgangs nicht eingeschränkt werden, um die Messergebnisse nicht zu beeinflussen. Dabei ist insbesondere die Bewegungsfreiheit des Radträgers von großer Bedeutung. Folglich muss die Vorrichtung eine hohe Flexibilität im Fixierbereich gewährleisten.

Sofern ein Einstellen erfolgt, erfolgt der Einstellvorgang in der Regel über Exzenter-Schrauben, die die Winkel des Radflansches (und somit der Bremsscheibe) relativ zur Fahrbahn (Sturzwinkel) und zur Fahrtrichtung (Spurwinkel) verstellen. Das Einstellen erzeugt gleichzeitig eine Verschiebung der Radnabe im Raum. Das Erfassen der Geometrieparameter der Radachse erfolgt vorzugsweise an der Bremsscheibe.

Die aus dem Stand der Technik bekannten Vorrichtungen weisen den Nachteil auf, dass deren Konstruktion sehr komplex ist und viel Bauraum einnimmt. Eine bestimmte Größe der Konstruktion ist im Stand der Technik erforderlich, um eine Kollision der Vorrichtung mit dem Bremssattel der Radachse zu vermeiden.

Der Erfindung liegt daher die Aufgabe zugrunde, eine Vorrichtung zumindest zum Vermessen der Geometrie einer Radachse eines Kraftfahrzeuges anzugeben, die eine geringe Komplexität aufweist und kompakt ausgebildet ist.

Die vorgenannte Aufgabe wird durch eine Vorrichtung gemäß Anspruch 1 gelöst.

Die Vorrichtung ist zumindest zum Vermessen mindestens eines Geometrieparameters einer Radachse eines Kraftfahrzeuges ausgebildet. Vorzugsweise ist die Vorrichtung auch zum Einstellen mindestens eines Geometrieparameters der Radachse eines Kraftfahrzeuges, beispielsweise Spurwinkel oder Sturzwinkel, ausgebildet. Zum Vermessen der Geometrie der Radachse weist die Vorrichtung mindestens ein Erfassungsmittel auf. Das Erfassungsmittel ist beispielsweise zur taktilen und/oder optischen Erfassung mindestens eines Geometrieparameters, insbesondere des Sturzwinkels und/oder des Spurwinkels, ausgebildet. Bevorzugt ist mindestens ein Einstellmittel, insbesondere eine Mehrzahl an Einstellmitteln, vorgesehen, um über verschiedene Stellschrauben an der Radachse Geometrieparameter der Radachse einzustellen.

Eine Radachse ist in der Vorrichtung fixierbar, unter anderem indem die Radachse beidseitig von jeweils einer Aufnahmevorrichtung fixiert wird. Vorzugsweise wird die Radachse jeweils an den Radnaben und/oder an den Bremsscheiben fixiert.

Die Aufnahmevorrichtungen sind jeweils in mindestens zwei Raumrichtungen bewegbar gehalten, insbesondere an mindestens einem Tragrahmen der Vorrichtung, so dass die Aufnahmevorrichtungen an die Radachse heranführbar sind.

Um ein Ende einer Radachse, insbesondere die Radnabe, zu fixieren, weist jede Aufnahmevorrichtung mindestens einen Fixierbereich auf. Der Fixierbereich ist beispielsweise derart ausgebildet, dass er zumindest teilweise an einer Bremsscheibe und/oder der Radnabe der Radachse anliegt und/oder die Bremsscheibe teilweise aufnimmt. Erfindungsgemäß ist der Fixierbereich derart ausgebildet, dass er die Radnabe zumindest teilweise aufnimmt. Beispielsweise ist vorgesehen, dass der Fixierbereich derart ausgebildet ist, dass mit dem Fixierbereich eine Bremsscheibe und/oder Radnabe aktiv greifbar ist, insbesondere mit hydraulisch, pneumatisch oder elektrisch bewegbaren Klemmarmen.

Um eine Beeinflussung der Radachse durch die Vorrichtung, insbesondere durch das Fixieren mittels der Vorrichtung, zu verhindern, ist erfindungsgemäß vorgesehen, dass zumindest der Fixierbereich der Aufnahmevorrichtung zumindest teilweise mittels zwei aufeinander bewegbarer, gewölbter Lagerflächen schwenkbar gelagert ist.

Die Lagerflächen gleiten aufeinander, so dass sich der Fixierbereich der Aufnahmevorrichtung flexibel an unterschiedliche Spur- und Sturzwinkel der Radachse anlegen kann.

Auch bei einer Veränderung des Spur- und/oder Sturzwinkels während der Fixierung - insbesondere durch Einstellen der Geometrieparameter der Radachse mittels der Vorrichtung - folgt der Fixierbereich der Bewegung der Radachse durch eine Verschiebung der Lagerflächen aufeinander.

Beispielsweise ist eine erste Lagerfläche der Lagerflächen fest an der Aufnahmevorrichtung gehalten und eine zweite Lagerfläche verschiebt sich auf der ersten Lagerfläche. Die Lagerflächen sind vorzugsweise zueinander korrespondierend ausgebildet. Insbesondere ist vorgesehen, dass die Lagerflächen sphärisch ausgebildet sind. Eine erste Lagerfläche ist beispielsweise konvex gewölbt, während die zweite Lagerfläche konkav gewölbt ist. Der Fixierbereich der Aufnahmevorrichtung ist mittels eines Kugelgelenks gelagert.

Beispielsweise sind die erste Lagerfläche und die zweite Lagerfläche als jeweils in mindestens zwei Richtungen gewölbte Flächen ausgebildet. Vorzugsweise bilden die erste Lagerfläche und die zweite Lagerfläche ein Gleitlager aus. Die erste Lagerfläche und/oder die zweite Lagerfläche sind vorzugsweise ringförmig geschlossen ausgebildet. Beispielsweise ist vorgesehen, dass die erste Lagerfläche und/oder die zweite Lagerfläche mindestens eine Ausnehmung, insbesondere eine Mehrzahl von Ausnehmungen, aufweist. Eine Ausnehmung ist beispielsweise ein Schlitz, eine Bohrung oder eine beliebig anders geformte Durchführung oder Vertiefung.

Die erste Lagerfläche und die zweite Lagerfläche sind vorzugsweise vollflächig miteinander in Kontakt. Insbesondere ist vorgesehen, dass die erste Lagerfläche und die zweite Lagerfläche zumindest im Umfang der Größe der ersten Lagerfläche oder im Umfang der Größe der zweiten Lagerfläche vollflächig miteinander in Kontakt stehen. Mindestens eine der Lagerflächen steht in vollflächigem Kontakt. Das ist insbesondere bei unterschiedlich großen Lagerflächen von Bedeutung. Vorzugsweise ist vorgesehen, dass die erste Lagerfläche und die zweite Lagerfläche in formschlüssigem Kontakt miteinander stehen.

Es ist auch vorgesehen, dass mehr als zwei Lagerflächen vorgesehen sind, wobei die Lagerflächen dann so angeordnet sind, dass jeweils zwei Hüll-Lagerflächen gebildet werden, die sich bei einer Bewegung des Fixierbereiches relativ zueinander bewegen.

Die Erfindung hat gegenüber dem Stand der Technik den Vorteil, dass ein Ausgleich von Winkeländerungen in Spur und Sturz über eine Bewegung der beiden Lagerflächen relativ zueinander erfolgt. Durch das Vorsehen der Lagerflächen kann auf eine kardanische Aufhängung verzichtet werden und es wird eine kompakte und vereinfachte Konstruktion ermöglicht, die eine vorteilhafte Flexibilität bietet.

Die erfindungsgemäße Konstruktion ist zudem wesentlich leichter als aus dem Stand der Technik bekannte Konstruktionen, was den Energiebedarf der Vorrichtung vorteilhaft beeinflusst.

Gemäß einer ersten Ausgestaltung der Vorrichtung ist vorgesehen, dass der Fixierbereich mindestens einen Gelenkkopf aufweist, und dass eine erste Lagerfläche der beiden Lagerflächen an dem Gelenkkopf ausgebildet ist. Die erste Lagerfläche am Gelenkkopf ist beispielsweise als Außenumfangsfläche oder als Innenumfangsfläche ausgebildet. Der Gelenkkopf weist beispielsweise eine konvex gewölbte Außenumfangsfläche als erste Lagerfläche auf. Alternativ dazu ist vorgesehen, dass der Gelenkkopf topfförmig mit einer konkav gewölbten Innenumfangsfläche ausgebildet ist.

Der Gelenkkopf ist vorzugsweise derart gehalten, dass er die erforderlichen Fixierkräfte von der Radachse, insbesondere der Radnabe, auf die Vorrichtung überträgt.

Als besonders vorteilhaft hat sich gemäß einer weiteren Ausgestaltung der Vorrichtung herausgestellt, wenn vorgesehen ist, dass eine Nabenglocke des Fixierbereiches zumindest mittelbar auf der ersten Lagerfläche schwenkbar gehalten ist. Die Nabenglocke ist insbesondere so ausgebildet, dass die Nabenglocke im Haltezustand zumindest einen Teil der Radnabe einer Radachse übergreift.

Es ist vorgesehen, dass die Nabenglocke unmittelbar schwenkbar auf der ersten Lagerfläche gehalten ist. Alternativ dazu ist auch vorgesehen, dass die Nabenglocke mittelbar schwenkbar, beispielsweise über ein weiteres Bauteil, an der Lagerfläche gehalten ist. Beide alternative Ausführungen ermöglichen, dass die Nabenglocke auch bei einer Änderung des Spur- oder Sturzwinkels stets vorteilhaft die Radnabe übergreift und an der Bremsscheibe der Radachse anliegt. Das Verschwenken der Nabenglocke wird durch Gleiten der beiden Lagerflächen übereinander realisiert.

Insbesondere um die Montage der Vorrichtung zu vereinfachen, ist gemäß einer weiteren Ausgestaltung vorgesehen, dass der Gelenkkopf mehrteilig ausgebildet ist. Insbesondere ist vorgesehen, dass der Gelenkkopf zumindest zweiteilig ausgebildet ist. Es ist vorgesehen, dass der Gelenkkopf topfförmig ausgebildet ist und eine innenliegende Gelenkkopfhülse aufweist, an der die erste Lagerfläche ausgebildet ist. Durch die mehrteilige Ausgestaltung des Gelenkkopfes kann dieser auf einfache Weise angeordnet und montiert werden.

Alternativ dazu wird der Gelenkkopf ausgebildet, indem eine Gelenkkopfhülse auf eine Aufnahmewelle aufgeschoben und fixiert wird. An der Gelenkkopfhülse ist die erste Lagerfläche ausgebildet.

Als vorteilhaft für die Stabilität in einem Haltezustand an der Radachse hat sich gemäß einer weiteren Ausgestaltung herausgestellt, wenn vorgesehen ist, dass zumindest die erste Lagerfläche derart angeordnet ist, dass die erste Lagerfläche zumindest im Haltezustand zumindest teilweise in eine Radnabe einer Radachse eindringt oder eine Radnabe einer Radachse zumindest teilweise übergreift. Dadurch ist gewährleistet, dass eine Kraftübertragung vorteilhaft auf die erste Lagerfläche erfolgt. Eine Instabilität, bei der die beiden Lagerflächen ungewollt aneinander abgleiten, wird dadurch verhindert. Die Radnabe wird vorzugsweise derart übergriffen oder die Lagerfläche dringt vorzugsweise derart in die Radnabe ein, dass Kippmomente minimiert werden.

In Abhängigkeit von der Ausgestaltung der Vorrichtung übergreift die erste Lagerfläche als Innenumfangsfläche die Radnabe einer Radachse von außen. Alternativ dazu ist vorgesehen, dass die erste Lagerfläche als Außenumfangsfläche in die Radnabe zumindest teilweise eindringt. Durch das Eindringen bzw. Übergreifen überschneiden sich die Lagerfläche und die Radnabe in mindestens einer gedachten Ebene, wodurch eine bevorzugte Kraftübertragung gewährleistet ist.

Vorteilhaft wird die Radnabe, insbesondere ein Radnabenkragen der Radnabe, derart im Fixierbereich aufgenommen, dass Lagerkräfte möglichst senkrecht auf die erste Lagerfläche, insbesondere auf einen Scheitelpunkt der ersten Lagerfläche, übertragen werden, bevorzugt um ein unbeabsichtigtes Verschwenken der Lagerflächen zu verhindern. Durch eine derart möglichst stabile Lagerung der Radnabe im Fixierbereich können Anpresskräfte zur Fixierung der Achse reduziert und damit die Messgenauigkeit vorteilhaft gesteigert werden.

Die Anpassbarkeit der Vorrichtung an Winkeländerungen wird weiter dadurch gesteigert, dass gemäß einer Ausgestaltung vorgesehen ist, dass zumindest ein Teil des Fixierbereiches rotierbar gehalten ist, so dass eine freie Drehung möglich ist. Beispielsweise sind die beiden Lagerflächen derart ausgebildet, dass auch eine Rotation über die beiden Lagerflächen erfolgen kann. Ferner ist vorgesehen, dass beispielsweise der Gelenkkopf rotierbar gehalten ist, so dass eine freie Drehung möglich ist.

Ferner ist vorgesehen, dass die Aufnahmewelle aktiv rotierbar gehalten ist. Beispielsweise ist die Aufnahmewelle mittels eines Elektromotors rotierbar, beispielsweise um eine Planschlagmessung durchzuführen. Alternativ dazu ist vorgesehen, dass insbesondere die Nabenglocke rotationsfest gehalten ist.

Gemäß einer weiteren Ausgestaltung der Vorrichtung ist vorgesehen, dass der Fixierbereich mindestens eine Aufnahmewelle aufweist. Die Aufnahmewelle ist beispielsweise in eine Aufnahmeöffnung im Fixierbereich eingebracht und in der Aufnahmeöffnung fixiert, beispielsweise mit einer Schraube, die in ein in der Aufnahmeöffnung angeordnetes Sackloch mit Gewinde, insbesondere des Zentrierdorns, eingeschraubt wird.

Des Weiteren hat es sich als vorteilhaft herausgestellt, wenn gemäß einer weiteren Ausgestaltung der Vorrichtung vorgesehen ist, dass die Aufnahmewelle in einer Lagerhülse in der Aufnahmeöffnung gelagert ist. Dabei ist die Lagerhülse in die Aufnahmeöffnung eingebracht und liegt mit einem Anschlagkragen an einer öffnungsseitigen Anschlagkante der Aufnahmeöffnung an.

Eine weitere Ausgestaltung der Vorrichtung sieht vor, dass mindestens ein Zentrierdorn vorhanden ist. Bevorzugt ist vorgesehen, dass eine Nabenglocke den Zentrierdorn ringförmig umgibt, so dass eine Radnabe, insbesondere zumindest teilweise schwenkbar, zwischen Zentrierdorn und Nabenglocke aufnehmbar ist. Zwischen Zentrierdorn und Nabenglocke ist vorzugsweise mindestens ein Aufnahmespalt ausgebildet.

Die Aufnahmewelle und der Zentrierdorn sind beispielsweise einstückig oder mehrteilig ausgebildet. Der Zentrierdorn ist entweder starr oder schwenkbar, vorzugsweise gemeinsam mit der Nabenglocke schwenkbar, ausgebildet. Bei einer starren Anordnung des Zentrierdornkopfes ist vorgesehen, dass der Zentrierdorn mit einer zentralen Schraube mit der Aufnahmewelle verschraubt ist. Ferner ist vorgesehen, dass der Zentrierdorn mit der Nabenglocke verschraubt ist. Der Zentrierdorn ist vorzugsweise derart ausgebildet, dass er im Haltezustand zumindest teilweise von der Radnabe der Radachse übergriffen wird.

Insbesondere um eine Kollision mit einem innerhalb einer Radnabe angeordneten Schraubenkopf einer Antriebswelle der Radachse zu verhindern, ist gemäß einer weiteren Ausgestaltung der Vorrichtung vorgesehen, dass der Zentrierdorn oder die Aufnahmewelle eine stirnseitige Ausnehmung aufweist. In Abhängigkeit von der Ausgestaltung ist die Ausnehmung entweder im Zentrierdorn oder in der Aufnahmewelle angeordnet. Die Ausnehmung ist vorzugsweise derart ausgebildet, dass eine Kollision mit einer innerhalb der Radnabe angeordneten Schraubenmutter einer Radachse im Haltezustand verhindert wird und der Fixierbereich vorteilhaft auf die Radachse einwirken kann.

Um die Montage vorteilhaft zu vereinfachen, ist gemäß einer weiteren Ausgestaltung vorgesehen, dass der Zentrierdorn mehrteilig ausgebildet ist. Beispielsweise ist der Zentrierdorn zwei- oder dreiteilig ausgebildet, insbesondere um den Zentrierdorn schwenkbar auf dem Gelenkkopf zu montieren.

Vorteilhaft um die Radnabe in verschiedenen Winkelpositionen auf dem Zentrierdorn zu halten, ist gemäß einer weiteren Ausgestaltung vorgesehen, dass der Zentrierdorn beabstandet zu einem stirnseitigen Endbereich mindestens einen Umlaufring aufweist, und dass der Zentrierdorn ausgehend von dem Umlaufring in Richtung des Endbereiches konisch verjüngt ausgebildet ist. Auf diese Weise kann die Radnabe beim Anlegen des Fixierbereiches an eine Radachse auf einfache Weise auf den Zentrierdorn rutschen und wird dadurch in die Nabenglocke geführt. Die Radnabe wird insbesondere in den Aufnahmespalt zwischen Zentrierdorn und Nabenglocke eingeführt.

Als besonders vorteilhaft zur Führung der Radnabe in verschiedenen Winkelpositionen hat sich ferner gemäß einer weiteren Ausgestaltung herausgestellt, wenn vorgesehen ist, dass der Zentrierdorn ausgehend von dem Umlaufring in einer Richtung weg von dem stirnseitigen Endbereich zumindest teilweise konisch verjüngend ausgebildet ist. Auf diese Weise kann sich die Radnabe in verschiedenen Winkelpositionen an die Oberfläche des Zentrierdornkopfes anlegen, ohne zwischen Zentrierdorn und Radnabe zu verkanten.

Gemäß einer ersten alternativen Ausgestaltung der Vorrichtung ist vorgesehen, dass eine zweite Lagerfläche der beiden Lagerflächen, insbesondere als Innenumfangsfläche, an einem Zentrierdorn ausgebildet ist. Die Aufnahmewelle weist dabei den Gelenkkopf auf, so dass der Zentrierdorn auf dem Gelenkkopf des Zentrierdorns verschwenkbar ist. Der vorzugsweise mindestens zweiteilig ausgebildete Zentrierdorn ist schwenkbar auf dem Gelenkkopf des Zentrierdorns gehalten. Bei diesem Ausführungsbeispiel ist die Nabenglocke beispielsweise starr an dem Zentrierdorn befestigt und verschwenkt zusammen mit dem Zentrierdorn auf dem Gelenkkopf des Zentrierdorns, um einer Änderung der Geometrieparameter der Radachse während des Einstellens zu folgen.

Der Gelenkkopf des Zentrierdorns ist beispielsweise derart ausgebildet, dass eine Gelenkkopfhülse von einer Endseite auf die Aufnahmewelle aufgeschoben wird und die Gelenkkopfhülse an einem Endkragen des Zentrierdorns anliegt. Die Gelenkkopfhülse wird im Montagezustand vorzugsweise zwischen dem Endkragen und der die Aufnahmewelle umgebenden Lagerhülse gehalten. Die Gelenkkopfhülse weist eine sphärisch gewölbte erste Lagerfläche auf, auf der eine korrespondierend sphärisch gewölbte zweite Lagerfläche des Zentrierdornkopfes bewegbar gehalten ist.

Die Nabenglocke ist vorzugsweise mit dem Zentrierdorn verbunden, indem sie starr mit dem Zentrierdorn verschraubt ist. Vorzugsweise ist die Nabenglocke mit einem Befestigungsring verschraubt und der Zentrierdorn wird zumindest teilweise zwischen Nabenglocke und Befestigungsring eingespannt.

Bei der vorstehend beschriebenen, ersten Alternative ist der Zentrierdorn schwenkbar ausgebildet und wird bei einer Winkeländerung - Spur oder Sturz - der Radachse gemeinsam mit der Nabenglocke verschwenkt, indem die erste Lagerfläche und die zweite Lagerfläche aufeinander gleiten.

Bei dieser Ausgestaltung ist auch vorgesehen, dass zwischen dem Zentrierdorn und der Aufnahmewelle ein vorkonfektioniertes Gelenklager angeordnet ist. Das Gelenklager beinhaltet die erste Lagerfläche und die zweite Lagerfläche. Bei dieser Ausgestaltung wird ein äußerer Teil des Gelenklagers, der die zweite Lagerfläche beinhaltet, als Teil der Zentrierdorns und ein innerer Teil des Gelenklagers, der die erste Lagerfläche beinhaltet, als Gelenkkopf angesehen. Das Gelenklager wird zur Montage auf die Aufnahmewelle aufgebracht und in den Zentrierdorn, insbesondere ein Zentrierdornaußenelement, eingebracht. Auch bei Verwendung eines vorkonfektionierten Gelenklagers ist folglich gemäß der Lehre der vorliegenden Erfindung der Zentrierdorn auf dem Gelenkkopf der Aufnahmewelle verschwenkbar gelagert.

Gemäß einer zweiten alternativen Ausgestaltung der Vorrichtung ist vorgesehen, dass eine zweite Lagerfläche der beiden Lagerflächen an einer Nabenglocke, insbesondere als Außenumfangsfläche, ausgebildet ist, und dass die Nabenglocke unmittelbar an dem Gelenkkopf, insbesondere einer Innenumfangsfläche des Gelenkkopfes, gelagert ist. Vorzugsweise ist der Gelenkkopf topfartig ausgebildet und umgibt den Zentrierdorn zumindest teilweise.

Bei diesem Ausführungsbeispiel ist die Aufnahmewelle zumindest mit einem Teil des Gelenkkopfes einstückig ausgebildet. Der Gelenkkopf weist vorzugsweise eine innenliegende Gelenkkopfhülse auf, die die erste Lagerfläche ausbildet. Die erste Lagerfläche ist eine Innenumfangsfläche.

Die zweite Lagerfläche ist an der Nabenglocke ausgebildet, so dass die Nabenglocke an der ersten Lagerfläche verschwenkbar geführt ist.

Der Zentrierdorn ist von der Nabenglocke umgeben angeordnet und mit der Aufnahmewelle zentral verschraubt. Bei dieser Ausgestaltung verschwenkt bei einer Winkeländerung die Radnabe und gegebenenfalls die Bremsscheibe zusammen mit der Nabenglocke, während der Zentrierdorn ortsfest ist. Die Radnabe bewegt sich bei einer Winkeländerung auf dem Zentrierdorn und wird vorzugsweise von dem Umlaufring am Zentrierdorn geführt.

Die innenliegende Gelenkkopfhülse umgibt den Zentrierdorn, so dass die erste Lagerfläche beabstandet zum Zentrierdorn angeordnet ist und die Nabenglocke mit der zweiten Lagerfläche zwischen den Zentrierdorn und die erste Lagerfläche einführbar ist. Zwischen der schwenkbaren Nabenglocke und dem starr angeordneten Zentrierdorn ist die Radnabe zumindest teilweise in einem Aufnahmespalt aufnehmbar.

Es ist zudem vorgesehen, dass eine zweite Lagerfläche der beiden Lagerflächen an einer Nabenglocke, insbesondere als Außenumfangsfläche, ausgebildet ist. Die Nabenglocke ist an dem Gelenkkopf, insbesondere an einer Innenumfangsfläche des Gelenkkopfes - als erste Lagerfläche -, gelagert. Vorzugsweise ist der Gelenkkopf topfartig ausgebildet.

Vorzugsweise ist die Aufnahmewelle beispielsweise zumindest mit einem Teil des Gelenkkopfes einstückig ausgebildet. Der Gelenkkopf weist insbesondere eine innenliegende Gelenkkopfhülse auf, die die erste Lagerfläche ausbildet. Die erste Lagerfläche ist eine Innenumfangsfläche. Die Nabenglocke ist mehrteilig ausgebildet. Die zweite Lagerfläche ist an der Nabenglocke, insbesondere einer Nabenglockenhülse der Nabenglocke, ausgebildet, so dass die Nabenglocke an der ersten Lagerfläche verschwenkbar gehalten ist.

Bei dieser Ausgestaltung verschwenken bei einer Winkeländerung die Radnabe und gegebenenfalls die Bremsscheibe zusammen mit der Nabenglocke, während der Gelenkkopf ortsfest ist.

Die innenliegende Gelenkkopfhülse ist insbesondere in einer Ausnehmung in dem Gelenkkopf angeordnet und liegt vorzugsweise an einer Seitenwand der Ausnehmung an. Die Breite der Ausnehmung entspricht im Wesentlichen der Breite der Gelenkkopfhülse. Die Radnabe, insbesondere der Radnabenkragen, ist in einer Durchführung in der Nabenglocke zumindest teilweise aufnehmbar. In der Durchführung ist vorzugsweise mindestens ein Bereich mit verringertem Durchmesser angeordnet, so dass die Radnabe umfänglich an dem Bereich mit dem verringerten Durchmesser anliegen kann. Der Durchmesser im Bereich des verringerten Durchmessers entspricht im Wesentlichen - mit dem erforderlichen Spiel - dem Außendurchmesser des Radnabenkragens.

Die Nabenglocke weist vorzugsweise mindestens eine Nabenglockenscheibe, insbesondere zur Anlage der Bremsscheibe, und mindestens einen, vorzugsweise einstückig mit der Nabenglockenscheibe ausgebildeten, Schaft auf. Bevorzugt erstreckt sich der Schaft im Wesentlichen orthogonal zur Nabenglockenscheibe. Der Schaft weist vorzugsweise eine im Wesentlichen zylindrische Außenfläche auf. Der Schaft wird insbesondere von der Durchführung vollständig oder zumindest teilweise durchtreten.

Die Nabenglockenhülse ist vorzugsweise auf dem Schaft der Nabenglocke angeordnet. Der Innendurchmesser der Nabenglockenhülse entspricht im Wesentlichen dem Außendurchmesser des Schafts - mit der erforderlichen Passung. Beispielsweise ist die Nabenglockenhülse mit einem Sicherungsmittel, insbesondere mit mindestens einem mit mindestens einer Nut im Schaft der Nabenglocke zusammenwirkenden Sicherungsmittel, auf dem Schaft befestigt. Beispielsweise ist das Sicherungsmittel als Sicherungsring ausgebildet. Der Fixierbereich ist entweder mit Zentrierdorn oder zentrierdornfrei ausgebildet.

Besonders bevorzugt ist vorgesehen, dass die innenliegende Gelenkkopfhülse und die Nabenglockenhülse als vorkonfektioniertes Gelenklager, insbesondere Radial-Gelenklager, ausgebildet sind. Das vorkonfektionierte Gelenklager, insbesondere Radial-Gelenklager, beinhaltet die erste Lagerfläche und die zweite Lagerfläche. Gleichwohl wird ein radial äußerer Teil des Gelenklagers, der die erste Lagerfläche beinhaltet, als Teil des Gelenkkopfes, nämlich als innenliegende Gelenkkopfhülse, und ein innerer Teil des Gelenklagers, der die zweite Lagerfläche beinhaltet, als Teil der Nabenglocke, nämlich als Nabenglockenhülse, angesehen. Das Gelenklager wird zur Montage auf den Schaft der Nabenglocke aufgebracht und mit dem Sicherungsmittel fixiert. Anschließend wird die Nabenglocke mit dem Gelenklager, insbesondere also auch mit der innenliegenden Gelenkkopfhülse, in den Gelenkkopf eingebracht und beispielsweise mit der innenliegenden Gelenkkopfhülse in einer Ausnehmung in dem Gelenkkopf befestigt. Beispielsweise ist vorgesehen, dass zwischen Nabenglocke und Gelenkkopf ein Gelenklager, insbesondere Radial-Gelenklager, angeordnet ist, wobei das Gelenklager die erste Lagerfläche und die zweite Lagerfläche beinhaltet.

Die Nabenglockenhülse und/oder die innenliegende Gelenkkopfhülse sind bevorzugt ringförmig ausgebildet. Die erste Lagerfläche ist beispielsweise als konkave Innenumfangsfläche an der innenliegenden Gelenkkopfhülse und die zweite Lagerfläche als konvexe Außenumfangsflache an der Nabenglockenhülse ausgebildet. Vorzugsweise sind die innenliegende Gelenkkopfhülse und/oder die Nabenglockenhülse spiegelsymmetrisch zu einer gedachten Ebene E ausgebildet, die von der Achse A des Fixierbereichs als Ebenennormale durchtreten wird.

Insbesondere zum Erkennen des Grades der Anlage einer Bremsschreibe an einer Anlagefläche der Nabenglocke ist gemäß einem weiteren Ausführungsbeispiel vorgesehen, dass der Fixierbereich mindestens einen Anlagering aufweist. Vorzugsweise umgibt der Anlagering die Nabenglocke vollumfänglich. Der Anlagering ist vorzugsweise federnd gelagert, so dass er die Anlagefläche der Nabenglocke umgibt. Vorzugsweise ist der Anlagering an der der Nabenglocke und/oder an einem Gegenring gelagert. Der Anlagering steht insbesondere über die Anlagefläche der Nabenglocke hinaus, so dass er entgegen einer federnden Lagerung parallel zur Achse A bewegbar ist, bis er bündig mit der Anlagefläche ausgerichtet ist. Bei korrekter Anlage einer Bremsscheibe ist der Anlagering vollumfänglich bündig mit der Anlagefläche ausgerichtet.

Der Umfang der Bewegung des Anlagerings ist durch mindestens zwei, insbesondere mindestens vier, mindestens sechs oder mindestens acht Sensoren erfassbar, wodurch mittels der Sensoren eine korrekte Anlage einer Bremsscheibe an der Anlagefläche erkennbar ist. Die Sensoren erfassen beispielsweise einen von dem Anlagering zurückgelegten Weg und/oder die Gleichmäßigkeit einer Bewegung des Anlagerings über seinen Umfang. Wird der Anlagering von einer Bremsscheibe ungleichmäßig oder nur über einen Teil seines Umfangs entlang der Achse A bewegt, ist daran erkennbar, dass die Bremsscheibe nicht korrekt anliegt. Vorzugsweise sind die Sensoren an einem starr mit der Nabenglocke verbundenen Gegenring angeordnet. Beispielsweise bildet der Gegenring das Gegenlager für die federnde Lagerung des Anlagerings.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel einer Vorrichtung zum Vermessen und Einstellen der Geometrie einer Radachse in perspektivischer Ansicht,
- Fig. 2: eine Detailansicht eines Ausführungsbeispiels einer Vorrichtung gemäß Fig. 1,
- Fig. 3: ein Ausführungsbeispiel einer Aufnahmevorrichtung für eine Vorrichtung gemäß Fig. 1 in perspektivischer Ansicht,
- Fig. 4: eine Schnittansicht durch die Aufnahmevorrichtung gemäß Fig. 3,
- Fig. 5: ein Ausführungsbeispiel einer Aufnahmevorrichtung für eine Vorrichtung gemäß Fig. 1 in perspektivischer Ansicht,
- Fig. 6: eine Schnittansicht durch die Aufnahmevorrichtung gemäß Fig. 5,
- Fig. 7: eine Schnittansicht durch ein weiteres Ausführungsbeispiel einer Aufnahmevorrichtung für eine Vorrichtung gemäß Fig. 1, und
- Fig. 8: eine Schnittansicht durch ein weiteres Ausführungsbeispiel einer Aufnahmevorrichtung für eine Vorrichtung gemäß Fig. 1.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

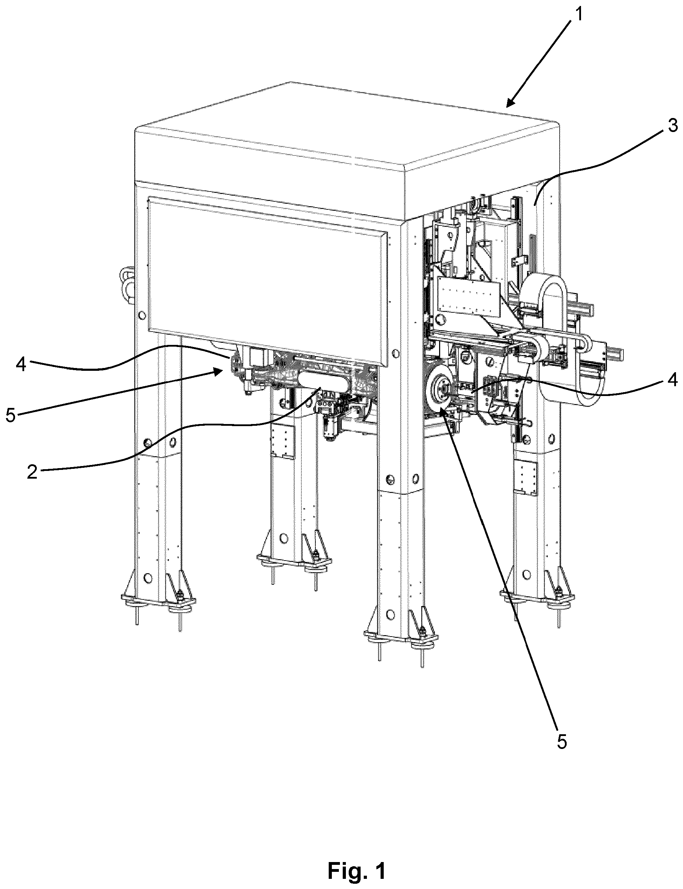

Fig. 1 zeigt eine Vorrichtung 1, die zum Vermessen und Einstellen von Geometrieparametern, insbesondere Spurwinkel und Sturzwinkel, einer Radachse 2 eines Kraftfahrzeuges ausgebildet ist. Die Vorrichtung 1 umfasst einen Tragrahmen 3, an dem mindestens zwei gegenüberliegend zueinander angeordnete Aufnahmevorrichtungen 4 zur Fixierung der gegenüberliegenden Enden 5 der Radachse 2 angeordnet sind. In der Vorrichtung 1 ist eine Radachse 2 angeordnet, die Aufnahmevorrichtungen befinden sich aber noch nicht im Haltezustand, in dem die gegenüberliegenden Enden 5 der Radachse 2 fixiert sind.

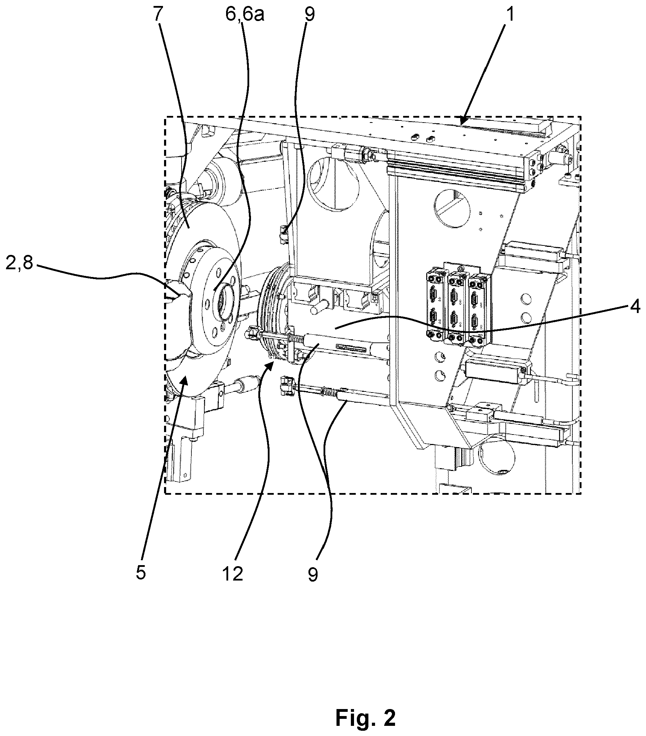

Fig. 2 zeigt eine vergrößerte Ansicht eines Ausführungsbeispiels einer Vorrichtung 1 gemäß Fig. 1. Die Radachse 2 weist an ihren gegenüberliegenden Enden 5 unter anderem eine an einer Radnabe 6 befestigte Bremsscheibe 7 und mindestens einen Bremssattel 8 auf. Die Radnabe 6 ragt mit einem Radnabenkragen 6a zumindest teilweise aus der Bremsscheibe 7 hervor.

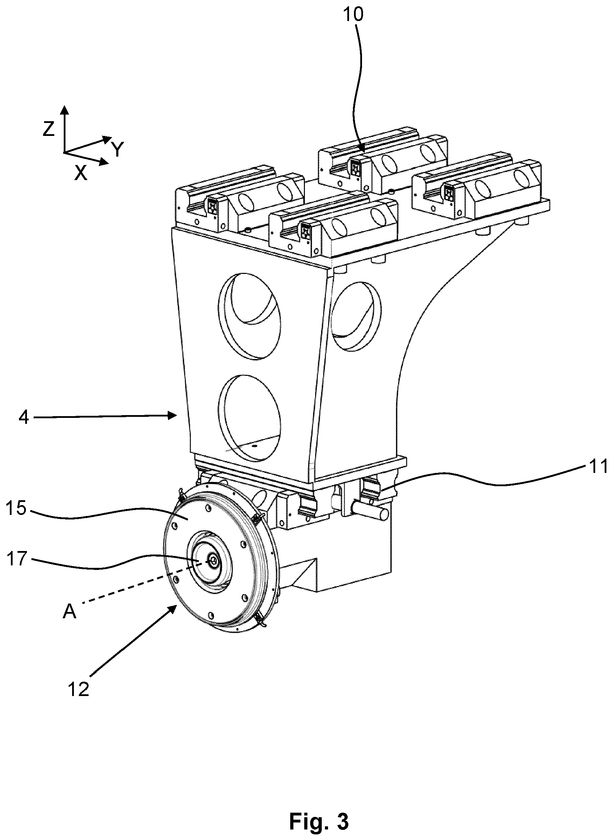

Gemäß Fig. 1 und Fig. 2 weist die Vorrichtung 1 eine Mehrzahl von Erfassungsmitteln 9 auf, die bei diesem Ausführungsbeispiel als Tastsensoren zur taktilen Erfassung der Geometrieparameter, insbesondere Spur- und Sturzwinkel, der Radachse 2 ausgebildet sind. Die Aufnahmevorrichtungen 4, die in den Fig. 3 bis Fig. 8 separat dargestellt sind, sind an der Vorrichtung 1 in mindestens zwei Raumrichtungen bewegbar gehalten, vorliegend nämlich mit einer ersten Schienenanordnung 10 in Richtung einer Y-Achse und mit einer zweiten Schienenanordnung 11 in Richtung einer X-Achse. Durch die Schienenanordnungen 10, 11 können die Aufnahmevorrichtungen 4 an die Radachse 2 herangeführt werden. Die beiden Aufnahmevorrichtungen 4 sind identisch ausgebildet.

Jede der Aufnahmevorrichtungen 4 weist einen Fixierbereich 12 zur Fixierung eines Endes 5 der Radachse 2 auf. Der Fixierbereich 12 wirkt im Haltezustand zum Fixieren vorzugsweise mit der Radnabe 6 und/oder mit der Bremsscheibe 7 zusammen. Der Fixierbereich 12 ist zumindest teilweise relativ zu einer Achse A, die parallel zur Y-Achse ist, sphärisch verschwenkbar.

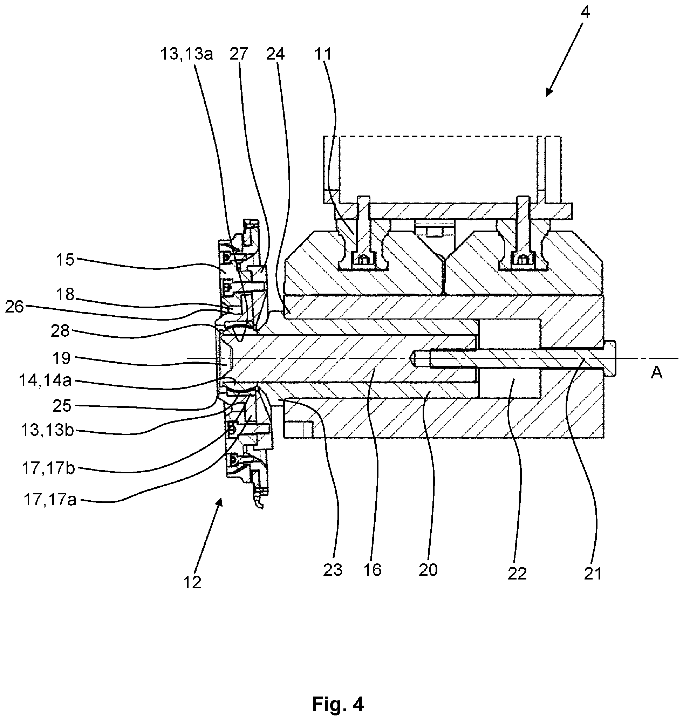

Fig. 3 und Fig. 4 zeigen ein erstes Ausführungsbeispiel einer Aufnahmevorrichtung 4 für eine Vorrichtung 1 gemäß Fig. 1 und 2. Der Fixierbereich 12 der Aufnahmevorrichtung 4 ist zumindest teilweise mittels zwei aufeinander bewegbarer, gewölbter Lagerflächen 13 schwenkbar gelagert. Die Lagerflächen 13 sind sphärisch und korrespondierend zueinander ausgebildet. Der Fixierbereich 12 weist einen Gelenkkopf 14 auf. Eine erste Lagerfläche 13a der beiden Lagerflächen 13 ist an dem Gelenkkopf 14 ausgebildet, nämlich hier als Außenumfangsfläche. Der Gelenkkopf 14 ist von einer Nabenglocke 15 umgeben. Die Nabenglocke 15 ist mittelbar auf der ersten Lagerfläche 13a schwenkbar gehalten.

Der Fixierbereich 12 weist ferner eine Aufnahmewelle 16 und einen Zentrierdorn 17 auf. Die Aufnahmewelle 16 erstreckt sich entlang der Achse A. Die Nabenglocke 15 umgibt den Zentrierdorn 17 ringförmig, so dass eine Radnabe 6, insbesondere mit ihrem Radnabenkragen 6a, zumindest teilweise verschwenkbar in einen Aufnahmespalt 18 zwischen Nabenglocke 15 und Zentrierdorn 17 aufnehmbar ist. Wenn der Radnabenkragen 6a im Haltezustand in den Aufnahmespalt 18 eingedrungen ist, ist die erste Lagerfläche 13a zumindest teilweise in die Radnabe 6 eingedrungen. Bei diesem Ausführungsbeispiel weist die Aufnahmewelle 16 eine stirnseitige Ausnehmung 19 auf, die eine Kollision mit einem Schraubenkopf einer Antriebswelle an der Radachse 2 verhindert.

Die Aufnahmewelle 16 ist in einer Lagerhülse 20 gelagert. Die Aufnahmewelle 16 ist mit einer Schraube 21 in einer Aufnahmeöffnung 22 befestigt. Die Lagerhülse 20 liegt mit einem Anschlagkragen 23 an einer Anschlagkante 24 an.

Der Zentrierdorn 17 ist derart ausgebildet, dass er beabstandet zu einem stirnseitigen Endbereich 25 mindestens einen Umlaufring 26 aufweist. Der Umlaufring 26 unterstützt das Einführen der Radnabe 6 in den Aufnahmespalt 18.

Ausgehend von dem Umlaufring 26 ist der Zentrierdorn 17 sowohl in einer Richtung weg von dem stirnseitigen Endbereich 25 als auch in Richtung des stirnseitigen Endbereiches 25 konisch verjüngend ausgebildet. Der Umlaufring 26 steht folglich umlaufend konvex hervor. Dadurch wird der Radnabenkragen 6a beim Heranführen vorteilhaft in den Aufnahmespalt 18 geführt.

Bei diesem Ausführungsbeispiel ist die Nabenglocke 15 über einen Befestigungsring 27 fest mit dem Zentrierdorn 17 verbunden. Der Befestigungsring 27 ist mit der Nabenglocke 15 verschraubt, wobei der Zentrierdorn 17 zwischen Nabenglocke 15 und Befestigungsring 27 eingeklemmt ist. Der Zentrierdorn 17 verschwenkt also stets gemeinsam mit der Nabenglocke 15.

Um die Montage zu vereinfachen, ist der Zentrierdorn 17 mehrteilig ausgebildet und verfügt über ein Zentrierdornaußenelement 17a und ein Zentrierdorninnenelement 17b. Eine zweite Lagerfläche 13b der beiden Lagerflächen 13 ist als Innenumfangsfläche an dem Zentrierdorn 17, insbesondere an dem Zentrierdorninnenelement 17b, ausgebildet. Die Aufnahmewelle 16 weist den Gelenkkopf 14 auf, so dass der Zentrierdorn 17 mit der zweiten Lagerfläche 13b auf der ersten Lagerfläche 13a am Gelenkkopf 14 des Zentrierdorns 17 verschwenkbar gehalten ist. Die erste Lagerfläche 13a und die zweite Lagerfläche 13b gleiten beim Bewegen aufeinander.

Der Gelenkkopf 14 ist durch eine Gelenkkopfhülse 14a gebildet, die auf die Aufnahmewelle 16 passgenau aufgeschoben ist und an einem Endkragen 28 des Zentrierdorns 17 anliegt. Die Gelenkkopfhülse 14a ist im dargestellten Montagezustand zwischen Endkragen 28 und Lagerhülse 20 eingespannt.

Es ist auch vorgesehen, dass das Zentrierdorninnenelement 17b und der Gelenkkopf 14, insbesondere die Gelenkkopfhülse 14a, Teil eines vorkonfektionierten Gelenklagers sind, das auf die Aufnahmewelle 16 aufgesetzt und in das Zentrierdornaußenelement 17a eingesetzt wird. Das Gelenklager beinhaltet die erste Lagerfläche 13a und die zweite Lagerfläche 13b.

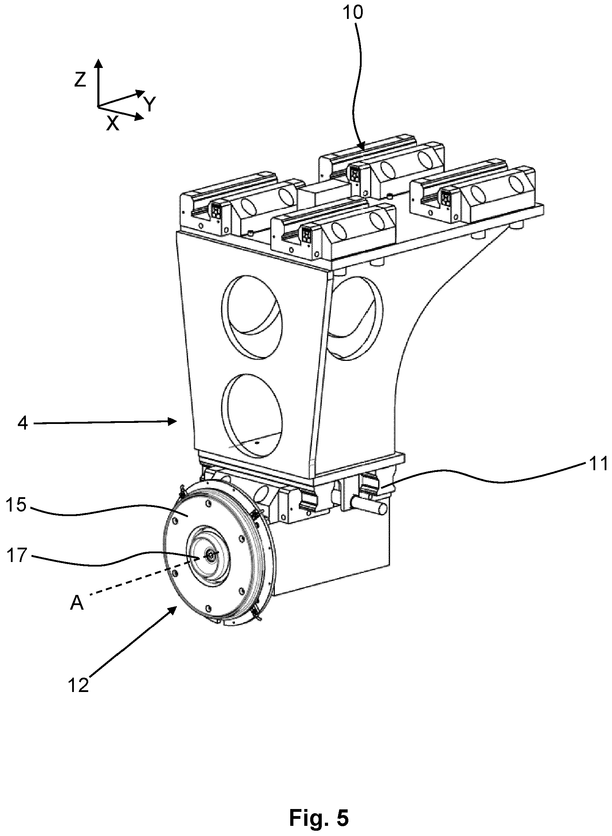

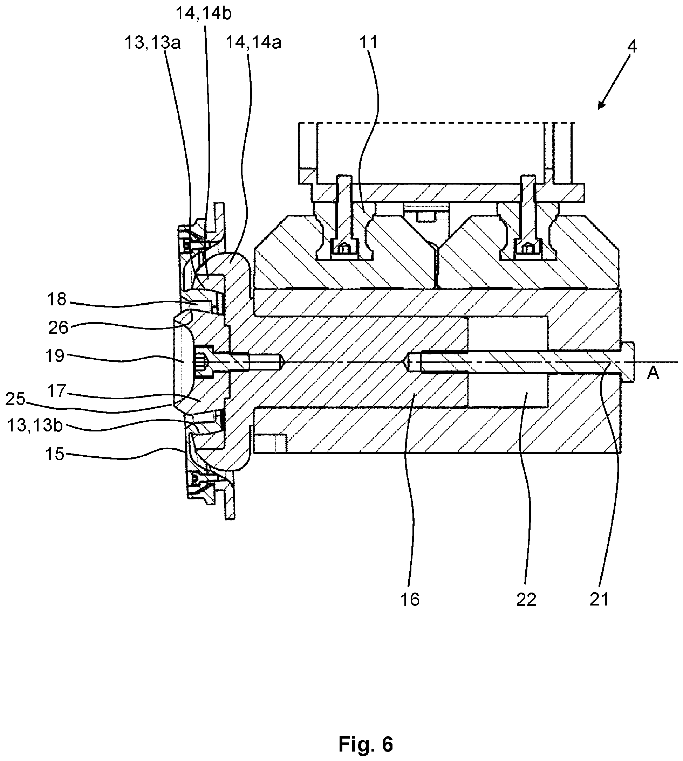

Fig. 5 und Fig. 6 zeigen ein alternatives Ausführungsbeispiel einer Aufnahmevorrichtung 4 für eine erfindungsgemäße Vorrichtung 1 gemäß Fig. 1. Auch dieses Ausführungsbeispiel weist einen Gelenkkopf 14 auf, an dem eine erste Lagerfläche 13a der beiden Lagerflächen 13 ausgebildet ist. Der Gelenkkopf 14 ist topfförmig und die erste Lagerfläche 13a ist hier als Innenumfangsfläche ausgebildet.

Eine Nabenglocke 15 des Fixierbereiches 12 ist bei diesem Ausführungsbeispiel unmittelbar auf der ersten Lagerfläche 13a schwenkbar gehalten. Eine zweite Lagerfläche 13b der beiden Lagerflächen 13 ist als Außenumfangsfläche unmittelbar an der Nabenglocke 15 ausgebildet. Die Nabenglocke 15 ist folglich unmittelbar an dem Gelenkkopf 14 an der ersten Lagerfläche 13a gelagert. Der Gelenkkopf 14 umgibt den Zentrierdorn 17 zumindest teilweise.

Der Fixierbereich 12 weist eine Aufnahmewelle 16 und einen Zentrierdorn 17 auf. Die Aufnahmewelle 16 ist einstückig mit einem Teil des Gelenkkopfs 14 ausgebildet und erstreckt sich entlang der Achse A. Der Gelenkkopf 14 weist ein Gelenkkopfaußenelement 14a und eine innenliegende Gelenkkopfhülse 14b auf. Die erste Lagerfläche 13a ist hier an der innenliegenden Gelenkkopfhülse 14b des Gelenkkopfs 14 ausgebildet.

Die innenliegenden Gelenkkopfhülse 14b ist in Bezug auf ihren Umfang zweiteilig ausgebildet, beispielsweise hälftig geteilt, um eine Montage auf der zweiten Lagerfläche 13b zu ermöglichen. Die beiden Teile der innenliegenden Gelenkkopfhülse 14b werden separat mit dem Gelenkkopfaußenelement 14a verschraubt. Die innenliegende Gelenkkopfhülse 14b vereinfacht die Montage des Gelenkkopfes 14, insbesondere die Anordnung der zweiten Lagerfläche 13b auf der ersten Lagerfläche 13a, durch ihre zweiteilige Ausgestaltung.

Die Nabenglocke 15 umgibt den Zentrierdorn 17, so dass eine Radnabe 6, insbesondere mit dem Radnabenkragen 6a, zumindest teilweise verschwenkbar zwischen Zentrierdorn 17 und Nabenglocke 15 in einem Aufnahmespalt 18 aufnehmbar ist. Bei diesem Ausführungsbeispiel ist der Zentrierdorn 17 nicht verschwenkbar ausgebildet, sondern starr mit der Aufnahmewelle 16 verschraubt. Lediglich die Nabenglocke 15 ist um den Zentrierdorn 17 herum verschwenkbar gehalten. Die Nabenglocke 15 ist mit der zweiten Lagerfläche 13b an der ersten Lagerfläche 13a relativ zum Zentrierdorn 17 verschwenkbar gehalten.

Der Zentrierdorn 17 weist eine stirnseitige Ausnehmung 19 als Raum für eine Schraube einer Antriebswelle in der Radnabe 6 im Haltezustand auf. Der Zentrierdorn 17 ist bei diesem Ausführungsbeispiel einteilig ausgebildet. Die Aufnahmewelle 16 ist mit einer Schraube 21 in der Aufnahmeöffnung 22 fixiert.

Auch bei diesem Ausführungsbeispiel weist der Zentrierdorn 17 einen Umlaufring 26 auf, wobei der Zentrierdorn 17 ausgehend von dem Umlaufring 26 sowohl in Richtung des stirnseitigen Endbereiches 25 als auch in der von dem stirnseitigen Endbereich 25 abgewandten Richtung konisch verjüngend ausgebildet ist. Der Umlaufring 26 steht folglich hervor. Eine Radnabe 6 ist im Haltezustand im Aufnahmespalt 18 zwischen Nabenglocke 15 und Zentrierdorn 17 aufgenommen. Ändert sich der Spur- oder Sturzwinkel der Radachse 2, also auch der Radnabe 6, verschwenken die erste Lagerfläche 13a und die zweite Lagerfläche 13b aufeinander, um die Nabenglocke 15 zur Fixierung nachzuführen.

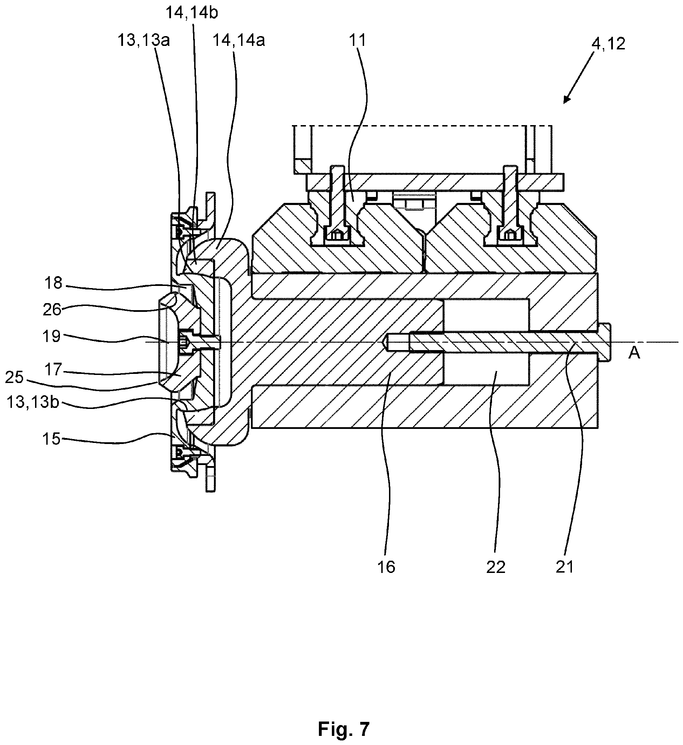

Fig. 7 zeigt eine Schnittansicht durch ein weiteres alternatives Ausführungsbeispiel einer Aufnahmevorrichtung 4 für eine Vorrichtung 1 gemäß Fig. 1. Auch dieses Ausführungsbeispiel weist einen Gelenkkopf 14 auf, an dem eine erste Lagerfläche 13a der beiden Lagerflächen 13 ausgebildet ist. Der Gelenkkopf 14 ist topfförmig und die erste Lagerfläche 13a ist hier als Innenumfangsfläche ausgebildet.

Eine Nabenglocke 15 des Fixierbereiches 12 ist bei diesem Ausführungsbeispiel unmittelbar auf der ersten Lagerfläche 13a schwenkbar gehalten. Eine zweite Lagerfläche 13b der beiden Lagerflächen 13 ist als Außenumfangsfläche unmittelbar an der Nabenglocke 15 ausgebildet. Die Nabenglocke 15 ist folglich unmittelbar an dem Gelenkkopf 14 an der ersten Lagerfläche 13a gelagert.

Der Fixierbereich 12 weist eine Aufnahmewelle 16 und einen Zentrierdorn 17 auf. Die Aufnahmewelle 16 ist einstückig mit einem Teil des Gelenkkopfs 14 ausgebildet und erstreckt sich entlang der Achse A. Der Gelenkkopf 14 weist ein Gelenkkopfaußenelement 14a und eine innenliegende Gelenkkopfhülse 14b auf. Das Gelenkkopfaußenelement 14a ist einstückig mit der Aufnahmewelle 16 ausgebildet. Die erste Lagerfläche 13a ist hier an der innenliegenden Gelenkkopfhülse 14b des Gelenkkopfs 14 ausgebildet.

Die innenliegenden Gelenkkopfhülse 14b ist in Bezug auf ihren Umfang zweiteilig ausgebildet, beispielsweise hälftig geteilt, um eine Montage auf der zweiten Lagerfläche 13b zu ermöglichen. Die beiden Teile der innenliegenden Gelenkkopfhülse 14b werden separat mit dem Gelenkkopfaußenelement 14a verschraubt. Die innenliegende Gelenkkopfhülse 14b vereinfacht die Montage des Gelenkkopfes 14, insbesondere die Anordnung der zweiten Lagerfläche 13b auf der ersten Lagerfläche 13a, durch ihre zweiteilige Ausgestaltung.

Die Nabenglocke 15 umgibt den Zentrierdorn 17, so dass eine Radnabe 6, insbesondere mit dem Radnabenkragen 6a, zwischen Zentrierdorn 17 und Nabenglocke 15 in einem Aufnahmespalt 18 aufnehmbar ist. Bei diesem Ausführungsbeispiel ist die Nabenglocke 15 in Richtung der Aufnahmewelle 16 geschlossen ausgebildet. Der Zentrierdorn 17 ist mit der Nabenglocke 15 verschraubt, so dass er gemeinsam mit der Nabenglocke 15 verschwenkbar ist. Die Nabenglocke 15 ist mit der zweiten Lagerfläche 13b an der ersten Lagerfläche 13a verschwenkbar gehalten. Der Zentrierdorn 17 dient lediglich dem Einführen der Radnabe 6 in den Aufnahmespalt 18. Es ist folglich auch eine Ausführungsform ohne Zentrierdorn 17 vorgesehen.

Der Zentrierdorn 17 weist eine stirnseitige Ausnehmung 19 auf, die eine Kollision mit einer Schraube einer Antriebswelle in der Radnabe 6 im Haltezustand verhindert. Der Zentrierdorn 17 ist bei diesem Ausführungsbeispiel einteilig ausgebildet. Die Aufnahmewelle 16 ist mit einer Schraube 21 in der Aufnahmeöffnung 22 fixiert.

Auch bei diesem Ausführungsbeispiel weist der Zentrierdorn 17 einen Umlaufring 26 auf, wobei der Zentrierdorn 17 ausgehend von dem Umlaufring 26 sowohl in Richtung des stirnseitigen Endbereiches 25 als auch in der von dem stirnseitigen Endbereich 25 abgewandten Richtung konisch verjüngend ausgebildet ist. Der Umlaufring 26 steht folglich hervor.

Eine Radnabe 6 ist im Haltezustand im Aufnahmespalt 18 zwischen Nabenglocke 15 und Zentrierdorn 17 aufgenommen. Ändert sich der Spur- oder Sturzwinkel der Radachse 2, also auch der Radnabe 6, verschwenken die erste Lagerfläche 13a und die zweite Lagerfläche 13b aufeinander, um die Nabenglocke 15 zur Fixierung nachzuführen.

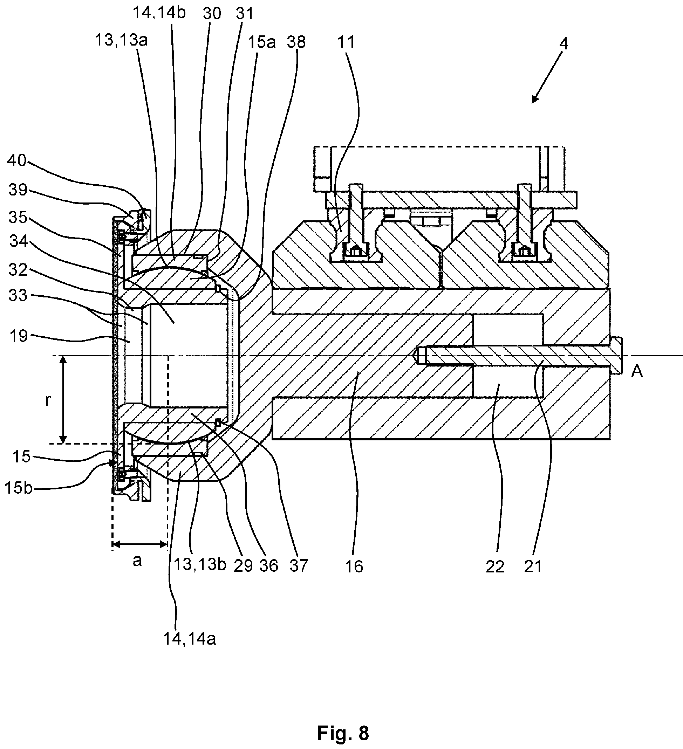

Fig. 8 zeigt eine Schnittansicht durch ein weiteres Ausführungsbeispiel einer Aufnahmevorrichtung 4 für eine Vorrichtung 1 gemäß Fig. 1. Auch dieses Ausführungsbeispiel weist einen Gelenkkopf 14 auf, an dem eine erste Lagerfläche 13a der beiden Lagerflächen 13 ausgebildet ist. Der Gelenkkopf 14 ist topfförmig und die erste Lagerfläche 13a ist hier als Innenumfangsfläche ausgebildet.

Der Fixierbereich 12 weist eine Aufnahmewelle 16 auf. Die Aufnahmewelle 16 ist einstückig mit einem Teil des Gelenkkopfs 14 ausgebildet und erstreckt sich, insbesondere symmetrisch, entlang der Achse A. Der Gelenkkopf 14 weist ein Gelenkkopfaußenelement 14a und eine innenliegende Gelenkkopfhülse 14b auf. Das Gelenkkopfaußenelement 14a ist vorteilhaft einstückig mit der Aufnahmewelle 16 ausgebildet. Die erste Lagerfläche 13a ist hier an der innenliegenden Gelenkkopfhülse 14b des Gelenkkopfs 14 ausgebildet. Die erste Lagerfläche 13a ist im dargestellten Querschnitt sphärisch gewölbt.

Eine zweite Lagerfläche 13b der beiden Lagerflächen 13 ist als Außenumfangsfläche an einer Nabenglockenhülse 15a einer Nabenglocke 15 ausgebildet. Die Nabenglockenhülse 15a ist auf einem Schaft 36 der Nabenglocke 15 montiert. Die Nabenglocke 15 des Fixierbereiches 12 ist folglich auf der ersten Lagerfläche 13a schwenkbar gehalten. Der Schaft 36 erstreckt sich in den Gelenkkopf 14 hinein. Der Schaft 36 erstreckt sich vorzugsweise weiter in den Gelenkkopf 14 hinein als die Nabenglockenhülse 15a. Die Nabenglockenhülse 15a ist auf den Schaft 36 aufgeschoben und mit einem Sicherungsmittel 37, das hier als Sicherungsring ausgebildet ist, auf dem Schaft 36 gesichert. Das Sicherungsmittel 37 ist in einer Nut 38 auf dem Schaft 36 zumindest formschlüssig gehalten.

Die Nabenglocke 15 ist an dem Gelenkkopf 14 über die zweite Lagerfläche 13b an der Nabenglockenhülse 15a an der ersten Lagerfläche 13a der innenliegenden Gelenkkopfhülse 14b gelagert. Die Nabenglocke 15 weist eine Anlagefläche 15b an einer Nabenglockenscheibe 35 auf, an die sich der sich in Richtung des Gelenkkopfes 14 erstreckende Schaft 36 anschließt. Das Verhältnis des Radius r der ersten Lagerfläche 13a im Schnittpunkt mit dem Drehpunkt der beiden Lagerflächen 13 - Scheitelpunkt der ersten Lagerfläche 13a - zum Abstand a des Drehpunktes zur Anlagefläche 15b entlang der Achse A ist bei diesem Ausführungsbeispiel etwa r/a = 1,67. Vorzugsweise liegt das Verhältnis r/a im Bereich zwischen 1 und 2, insbesondere zwischen 1,4 und 1,8.

Die innenliegende Gelenkkopfhülse 14b ist bei diesem Ausführungsbeispiel schmaler als die Nabenglockenhülse 15a ausgebildet. Die innenliegenden Gelenkkopfhülse 14b ist in Bezug auf ihren Umfang vorzugweise zweiteilig ausgebildet, beispielsweise hälftig geteilt, um eine Montage auf der zweiten Lagerfläche 13b zu ermöglichen. Die innenliegende Gelenkkopfhülse 14b wird in eine korrespondierende Ausnehmung 30 eingebracht, so dass sie an einer Seitenwand 31 der Ausnehmung 30 anliegt. Die innenliegenden Gelenkkopfhülse 14b weist vorteilhaft eine Nut 29 auf. In die Nut 29 werden den Gelenkkopf 14, insbesondere das Gelenkkopfaußenelement 14a, durchtretende Schrauben - nicht dargestellt - eingebracht, um die innenliegende Gelenkkopfhülse 14b im Gelenkkopf 14, insbesondere im Gelenkkopfaußenelement 14a, zu befestigen.

Bei diesem Ausführungsbeispiel kann sich eine Radnabe 6, insbesondere mit dem Radnabenkragen 6a, in die Nabenglocke 15 hinein, nämlich in die Durchführung 34 hinein, erstrecken. Insbesondere zur Anlage des Radnabenkragens weist die Nabenglocke 15 vorzugsweise einen verjüngten Bereich 32 mit zwei Führungsschrägen 33 auf. Der verjüngte Bereich 32 reduziert den Innendurchmesser einer Durchführung 34 in der Nabenglocke 15 lokal. Die Durchführung 34 ist im Schaft 36 der Nabenglocke 15 ausgebildet. Bei diesem Ausführungsbeispiel ist die Nabenglocke 15 in Richtung der Aufnahmewelle 16 offen ausgebildet. Es ist auch vorgesehen, dass die Durchführung 34 den Schaft 36 der Nabenglocke 15 nur teilweise durchtritt.

Besonders bevorzugt ist vorgesehen, dass die innenliegende Gelenkkopfhülse 14b und die Nabenglockenhülse 15a als vorkonfektioniertes Gelenklager ausgebildet sind. Das vorkonfektionierte Gelenklager beinhaltet die erste Lagerfläche 13a und die zweite Lagerfläche 13b. Gleichwohl wird ein radial äußerer Teil des Gelenklagers, der die erste Lagerfläche 13a beinhaltet, als Teil des Gelenkkopfes 14, nämlich als innenliegende Gelenkkopfhülse 14b, und ein innerer Teil des Gelenklagers, der die zweite Lagerfläche 13b beinhaltet, als Teil der Nabenglocke 15, nämlich als Nabenglockenhülse 15a, angesehen. Das Gelenklager wird zur Montage auf den Schaft 36 der Nabenglocke 15 aufgebracht und mit dem Sicherungsmittel 37 fixiert.

Die Aufnahmewelle 16 ist mit einer Schraube 21 in der Aufnahmeöffnung 22 fixiert. Ändert sich der Spur- oder Sturzwinkel der Radachse 2, also auch der Radnabe 6, verschwenken die erste Lagerfläche 13a und die zweite Lagerfläche 13b aufeinander, um die Nabenglocke 15 zur Fixierung nachzuführen.

Zum Erkennen der Anlage einer Bremsschreibe an der Anlagefläche 15b weist der Fixierbereich 12 einen Anlagering 39 auf. Der Anlagering 39 ist vorzugsweise federnd an der Nabenglocke 15 gelagert. Der Anlagering 39 steht über die Anlagefläche 15b hinaus, so dass er bei korrekter Anlage einer Bremsscheibe entlang seines gesamten Umfangs, insbesondere parallel zur Achse A, bewegbar ist. Der Umfang der Bewegung des Anlagerings ist durch mindestens zwei, insbesondere mindestens vier, mindestens sechs oder mindestens acht Sensoren erfassbar, wodurch eine korrekte Anlage einer Bremsscheibe an der Anlagefläche 15b erkennbar ist. Wird der Anlagering 39 von einer Bremsscheibe ungleichmäßig oder nur über einen Teil seines Umfangs entlang der Achse A bewegt, ist daran erkennbar, dass die Bremsscheibe nicht korrekt anliegt. Vorzugsweise sind die Sensoren an einem starr mit der Nabenglocke 15 verbundenen Gegenring 40 angeordnet.

### Bezugszeichenliste

- 1: Vorrichtung
- 2: Radachse
- 3: Tragrahmen
- 4: Aufnahmevorrichtung
- 5: Ende der Radachse
- 6: Radnabe
- 7: Bremsscheibe
- 8: Bremssattel
- 9: Erfassungsmittel
- 10: Erste Schienenanordnung
- 11: Zweite Schienenanordnung
- 12: Fixierbereich
- 13: Lagerflächen
- 13a: Erste Lagerfläche
- 13b: Zweite Lagerfläche
- 14: Gelenkkopf
- 14a: Gelenkkopfaußenelement
- 14b: Innenliegende Gelenkkopfhülse
- 15: Nabenglocke
- 15a: Nabenglockenhülse
- 15b: Anlagefläche von 15
- 16: Aufnahmewelle
- 17: Zentrierdorn
- 17a: Zentrierdornaußenelement
- 17b: Zentrierdorninnenelement
- 18: Aufnahmespalt
- 19: Ausnehmung
- 20: Lagerhülse
- 21: Schraube
- 22: Aufnahmeöffnung
- 23: Anschlagkragen
- 24: Anschlagkante
- 25: Endbereich
- 26: Umlaufring
- 27: Befestigungsring
- 28: Endkragen
- 29: Nut
- 30: Ausnehmung
- 31: Seitenwand von 30
- 32: Verjüngter Bereich
- 33: Führungsschrägen
- 34: Durchführung
- 35: Nabenglockenscheibe
- 36: Schaft von 15
- 37: Sicherungsmittel
- 38: Nut
- 39: Anlagering
- 40: Gegenring

- X: Achse
- Y: Achse
- Z: Achse
- A: Achse
- r: Radius von 13a im Schnittpunkt mit dem Drehpunkt
- a: Abstand des Drehpunkts von 13 zur Anlagefläche 15b

## Patentansprüche

1. Vorrichtung (1) zumindest zum Vermessen der Geometrie einer Radachse (2) eines Kraftfahrzeuges, mit mindestens zwei Aufnahmevorrichtungen (4) zur Fixierung der gegenüberliegenden Enden (5) der Radachse (2), und mindestens einem Erfassungsmittel (9) zum Erfassen mindestens eines Geometrieparameters der Radachse (2), wobei die Aufnahmevorrichtungen (4) in mindestens zwei Raumrichtungen (X,Y) bewegbar gehalten sind, wobei jede Aufnahmevorrichtung (4) mindestens einen Fixierbereich (12) zur Fixierung eines Endes (5) der Radachse (2) aufweist,
wobei zumindest der Fixierbereich (12) der Aufnahmevorrichtung (4) zumindest teilweise mittels mindestens zwei aufeinander bewegbarer, gewölbter Lagerflächen (13) schwenkbar gelagert ist,
**dadurch gekennzeichnet, dass**
der Fixierbereich derart ausgebildet ist, dass er eine Radnabe (6) zumindest teilweise aufnimmt.

2. Vorrichtung (1) nach Anspruch 1,
**dadurch gekennzeichnet, dass**
der Fixierbereich (12) mindestens einen Gelenkkopf (14) aufweist, dass eine erste Lagerfläche (13a) der beiden Lagerflächen (13) an dem Gelenkkopf (14) ausgebildet ist, bevorzugt dass die erste Lagerfläche (13a) eine Außenumfangsfläche oder eine Innenumfangsfläche ist.

3. Vorrichtung (1) nach Anspruch 2,
**dadurch gekennzeichnet, dass**
eine Nabenglocke (15) des Fixierbereichs (12) zumindest mittelbar auf der ersten Lagerfläche (13a) schwenkbar gehalten ist.

4. Vorrichtung (1) nach Anspruch 2 oder 3,
**dadurch gekennzeichnet, dass**
der Gelenkkopf (14) mehrteilig ausgebildet ist.

5. Vorrichtung (1) nach einem der Ansprüche 2 bis 4,
**dadurch gekennzeichnet, dass**
zumindest die erste Lagerfläche (13a) derart angeordnet ist, dass die erste Lagerfläche (13a) zumindest im Haltezustand zumindest teilweise in eine Radnabe (6) einer Radachse (2) eindringt oder eine Radnabe (6) einer Radachse (2) zumindest teilweise übergreift.

6. Vorrichtung (1) nach einem der vorstehenden Ansprüche,
**dadurch gekennzeichnet, dass**
zumindest ein Teil des Fixierbereichs (12) rotierbar, insbesondere aktiv rotierbar, gehalten ist.

7. Vorrichtung (1) nach einem der Ansprüche 1 bis 6,
**dadurch gekennzeichnet, dass**
der Fixierbereich (12) mindestens eine Aufnahmewelle (16) aufweist, insbesondere dass die Aufnahmewelle (16) eine stirnseitige Ausnehmung (19) aufweist und/oder dass die Aufnahmewelle (16) in einer Lagerhülse (20) gelagert ist.

8. Vorrichtung (1) nach einem der Ansprüche 1 bis 7,
**dadurch gekennzeichnet, dass**
der Fixierbereich (12) mindestens einen Zentrierdorn (17) aufweist, bevorzugt dass eine Nabenglocke (15) den Zentrierdorn (17) ringförmig umgibt, so dass eine Radnabe (6), insbesondere zumindest teilweise verschwenkbar, zwischen Zentrierdorn (17) und Nabenglocke (15) aufnehmbar ist.

9. Vorrichtung (1) nach Anspruch 8,
**dadurch gekennzeichnet, dass**
der Zentrierdorn (17) eine stirnseitige Ausnehmung (19) aufweist und/oder dass zumindest der Zentrierdorn (17) mehrteilig ausgebildet ist.

10. Vorrichtung (1) nach Anspruch 8 oder 9,
**dadurch gekennzeichnet, dass**
der Zentrierdorn (17) beabstandet zu einem stirnseitigen Endbereich (25) mindestens einen Umlaufring (26) aufweist und dass der Zentrierdorn (17) ausgehend von dem Umlaufring (26) in Richtung des Endbereichs (25) konisch verjüngt ausgebildet ist.

11. Vorrichtung (1) nach einem der Ansprüche 7 bis 10,
**dadurch gekennzeichnet, dass**
eine zweite Lagerfläche (13b) der beiden Lagerflächen (13), insbesondere als Innenumfangsfläche, an dem Zentrierdorn (17) ausgebildet ist, und dass die Aufnahmewelle (16) einen Gelenkkopf (14) aufweist, so dass der Zentrierdorn (17) auf dem Gelenkkopf (14) der Aufnahmewelle (16) verschwenkbar ist, und/oder dass die Nabenglocke (15) mit dem Zentrierdorn (17) verbunden ist.

12. Vorrichtung (1) nach einem der Ansprüche 2 bis 10,
**dadurch gekennzeichnet, dass**
eine zweite Lagerfläche (13b) der beiden Lagerflächen (13) an einer Nabenglocke (15), insbesondere als Außenumfangsfläche, ausgebildet ist, und dass die Nabenglocke (15) unmittelbar an dem Gelenkkopf (14), insbesondere einer Innenumfangsfläche des Gelenkkopfs (14), gelagert ist, bevorzugt dass der Gelenkkopf (14) die zweite Lagerfläche (13b) zumindest teilweise umgibt.

13. Vorrichtung (1) nach Anspruch 12,
**dadurch gekennzeichnet, dass**
der Gelenkkopf (14) eine innenliegende Gelenkkopfhülse (14b) aufweist, und dass die innenliegende Gelenkkopfhülse (14b) die Nabenglocke (15) umgibt.

14. Vorrichtung (1) nach Anspruch 12 oder 13,
**dadurch gekennzeichnet, dass**
die Nabenglocke (15) mindestens eine, insbesondere außenliegende, Nabenglockenhülse (15a) aufweist, und dass die zweite Lagerfläche (13b) an der Nabenglockenhülse (15a) ausgebildet ist.

## Claims

1. A device (1) at least for measuring the geometry of an axle (2) of a motor vehicle, comprising at least two mounting devices (4) for fastening the opposite ends (5) of the axle (2), and at least one detection means (9) for detecting at least one geometric parameter of the axle (2), wherein the mounting devices (4) are displaceably mounted in at least two spatial directions (X,Y), wherein each of the mounting devices (4) has at least one fastening region (12) for fastening an end (5) of the axle (2),
wherein at least the fastening region (12) of the mounting device (4) is pivot-mounted at least in part by means of at least two mutually movable, arched bearing surfaces (13),
**characterized in that**
the fastening region is configured such that it at least partially receives a wheel hub (6).

2. The device (1) according to claim 1,
**characterized in that**
the fastening region (12) comprises at least one articulated head (14), that a first bearing surface (13a) of the two bearing surfaces (13) is provided on the articulated head (14), preferably that the first bearing surface (13a) is an external perimeter surface or an internal perimeter surface.

3. The device (1) according to claim 2,
**characterized in that**
a hub dome (15) of the fastening region (12) is pivot-mounted at least indirectly onto the first bearing surface (13a).

4. The device (1) according to claim 2 or 3,
**characterized in that**
the articulated head (14) is a multi-part design.

5. The device (1) according to any one of claims 2 to 4,
**characterized in that**
at least the first bearing surface (13a) is arranged such that the first bearing surface (13a) penetrates at least in the installed state at least partially into a wheel hub (6) of an axle (2) or at least partly extends over a wheel hub (6) of an axle (2).

6. The device (1) according to any one of the preceding claims,
**characterized in that**
at least a portion of the fastening region (12) is mounted so as to rotate, in particular so as to rotate actively.

7. The device (1) according to any one of claims 1 to 6,
**characterized in that**
the fastening region (12) comprises at least one mounting shaft (16), in particular that the mounting shaft (16) comprises a front-side recess (19) and/or that the mounting shaft (16) is seated in a bearing housing (20).

8. The device (1) according to any one of claims 1 to 7,
**characterized in that**
the fastening region (12) comprises at least one centering spindle (17), preferably that a hub dome (15) surrounds the centering spindle (17) in a ringlike manner, so that a wheel hub (6) can be mounted in particular at least in a partly pivoting manner between the centering spindle (17) and the hub dome (15).

9. The device (1) according to claim 8,
**characterized in that**
the centering spindle (17) comprises a front-side recess (19) and/or that at least the centering spindle (17) is of a multi-part design.

10. The device (1) according to claim 8 or 9,
**characterized in that**
the centering spindle (17) comprises at least one perimeter ring (26) spaced away from a front-side end region (25) and that the centering spindle (17) is of a conically tapered design proceeding from the perimeter ring (26) in the direction of the end region (25).

11. The device (1) according to any one of claims 7 to 10,
**characterized in that**
a second bearing surface (13b) of the two bearing surfaces (13) is designed on the centering spindle (17), in particular as an internal perimeter surface, and that the mounting shaft (16) comprises an articulated head (14), so that the centering spindle (17) can pivot on the articulated head (14) of the mounting shaft (16), and/or that the hub dome (15) is connected to the centering spindle (17).

12. The device (1) according to any one of claims 2 to 10,
**characterized in that**
a second bearing surface (13b) of the two bearing surfaces (13) is designed on a hub dome (15), in particular as an external perimeter surface, and that the hub dome (15) is seated directly upon the articulated head (14), in particular upon an internal perimeter surface of the articulated head (14), preferably that the articulated head (14) at least partly surrounds the second bearing surface (13b).

13. The device (1) according to claim 12,
**characterized in that**
the articulated head (14) comprisesan internal articulated head casing (14b), and that the internal articulated head casing (14b) surrounds the hub dome (15).

14. The device (1) according to claim 12 or 13,
**characterized in that**
the hub dome (15) has at least one, in particular outer, hub dome casing (15a), and that the second bearing surface (13b) is formed on the hub dome casing (15a).

## Revendications

1. Dispositif (1) au moins pour mesurer la géométrie d'un essieu de roue (2) d'un véhicule automobile, comprenant au moins deux dispositifs de réception (4) pour fixer les extrémités opposées (5) de l'essieu de roue (2), et au moins un moyen de détection (9) pour détecter au moins un paramètre géométrique de l'essieu de roue (2), les dispositifs de réception (4) étant maintenus de manière mobile dans au moins deux directions spatiales (X, Y), chaque dispositif de réception (4) présentant au moins une zone de fixation (12) pour fixer une extrémité (5) de l'essieu de roue (2),
au moins la zone de fixation (12) du dispositif de réception (4) étant montée de manière pivotante au moins partiellement au moyen d'au moins deux surfaces de palier bombées (13) mobiles l'une par rapport à l'autre,
**caractérisé en ce que**
la zone de fixation est conçue de telle sorte qu'elle reçoit au moins partiellement un moyeu de roue (6).

2. Dispositif (1) selon la revendication 1,
**caractérisé en ce que**
la zone de fixation (12) présente au moins une tête d'articulation (14), **en ce qu'**une première surface de palier (13a) des deux surfaces de palier (13) est formée sur la tête d'articulation (14), de préférence **en ce que** la première surface de palier (13a) est une surface périphérique extérieure ou une surface périphérique intérieure.

3. Dispositif (1) selon la revendication 2,
**caractérisé en ce qu'**
une cloche de moyeu (15) de la zone de fixation (12) est maintenue de manière pivotante au moins indirectement sur la première surface de palier (13a).

4. Dispositif (1) selon la revendication 2 ou 3,
**caractérisé en ce que**
la tête d'articulation (14) est réalisée en plusieurs parties.

5. Dispositif (1) selon l'une des revendications 2 à 4,
**caractérisé en ce qu'**
au moins la première surface de palier (13a) est disposée de telle sorte que la première surface de palier (13a) pénètre au moins partiellement dans un moyeu de roue (6) d'un essieu de roue (2) au moins dans l'état de maintien ou chevauche au moins partiellement un moyeu de roue (6) d'un essieu de roue (2).

6. Dispositif (1) selon l'une des revendications précédentes,
**caractérisé en ce qu'**
au moins une partie de la zone de fixation (12) est maintenue de manière rotative, en particulier de manière activement rotative.

7. Dispositif (1) selon l'une des revendications 1 à 6,
**caractérisé en ce que**
la zone de fixation (12) présente au moins un arbre de réception (16), en particulier **en ce que** l'arbre de réception (16) présente un évidement frontal (19) et/ou **en ce que** l'arbre de réception (16) est monté dans une douille de palier (20).

8. Dispositif (1) selon l'une des revendications 1 à 7,
**caractérisé en ce que**
la zone de fixation (12) présente au moins un mandrin de centrage (17), de préférence **en ce qu'**une cloche de moyeu (15) entoure le mandrin de centrage (17) de manière annulaire, de sorte qu'un moyeu de roue (6), en particulier de manière au moins partiellement pivotante, peut être reçu entre le mandrin de centrage (17) et la cloche de moyeu (15).

9. Dispositif (1) selon la revendication 8,
**caractérisé en ce que**
le mandrin de centrage (17) présente un évidement frontal (19) et/ou **en ce qu'**au moins le mandrin de centrage (17) est réalisé en plusieurs parties.

10. Dispositif (1) selon la revendication 8 ou 9,
**caractérisé en ce que**
le mandrin de centrage (17) présente, à distance d'une zone d'extrémité frontale (25), au moins une bague périphérique (26) et **en ce que** le mandrin de centrage (17) est réalisé de manière coniquement effilée à partir de la bague périphérique (26) en direction de la zone d'extrémité (25).

11. Dispositif (1) selon l'une des revendications 7 à 10,
**caractérisé en ce qu'**
une deuxième surface de palier (13b) des deux surfaces de palier (13) est formée sur le mandrin de centrage (17), en particulier en tant que surface périphérique intérieure, et **en ce que** l'arbre de réception (16) présente une tête d'articulation (14), de sorte que le mandrin de centrage (17) peut pivoter sur la tête d'articulation (14) de l'arbre de réception (16), et/ou **en ce que** la cloche de moyeu (15) est reliée au mandrin de centrage (17).

12. Dispositif (1) selon l'une des revendications 2 à 10,
**caractérisé en ce qu'**
une deuxième surface de palier (13b) des deux surfaces de palier (13) est formée sur une cloche de moyeu (15), en particulier en tant que surface périphérique extérieure, et **en ce que** la cloche de moyeu (15) est supportée directement sur la tête d'articulation (14), en particulier sur une surface périphérique intérieure de la tête d'articulation (14), de préférence **en ce que** la tête d'articulation (14) entoure au moins partiellement la deuxième surface de palier (13b).

13. Dispositif (1) selon la revendication 12,
**caractérisé en ce que**
la tête d'articulation (14) présente une douille de tête d'articulation intérieure (14b), et **en ce que** la douille de tête d'articulation intérieure (14b) entoure la cloche de moyeu (15).

14. Dispositif (1) selon la revendication 12 ou 13,
**caractérisé en ce que**
la cloche de moyeu (15) présente au moins une douille de cloche de moyeu (15a), en particulier extérieure, et **en ce que** la deuxième surface de palier (13b) est formée sur la douille de cloche de moyeu (15a).
